# EUROPEAN PATENT APPLICATION

(11) **EP 4 664 153 A1**
(43) Date of publication of application: **17.12.2025**
(21) Application number: 23927884.9
(22) Date of filing: 17.03.2023
(51) Int. Cl.: G01S 7/486

(54) **DETECTION SYSTEM, LASER RADAR, AND TERMINAL DEVICE**

(71) Applicant: Shenzhen Yinwang Intelligent Technologies Co., Ltd., Shenzhen, Guangdong 518110 (CN)
(72) Inventor: QIU, Sunjie, Shenzhen, Guangdong 518129 (CN); LIU, Jun, Shenzhen, Guangdong 518129 (CN); HONG, Yu, Shenzhen, Guangdong 518129 (CN); ZHANG, Haoliang, Shenzhen, Guangdong 518129 (CN)
(74) Representative: MERH-IP Matias Erny Reichl Hoffmann Patentanwälte PartG mbB
(86) International application number: PCT/CN2023/082189
(87) International publication number: WO 2024/192565

(57) **Abstract**

This application provides a detection system, a lidar, and a terminal device, to reduce a quantity of detectors required by the detection system and reduce manufacturing costs. The detection system includes an optical fiber array and a detector array. In the optical fiber array and the detector array, an optical fiber input end of the optical fiber array includes M×N optical fiber ports, an optical fiber output end of the optical fiber array includes N optical fiber ports, the detector array includes N detectors, the N optical fiber ports at the optical fiber output end one-to-one correspond to the N detectors, and both M and N are integers greater than or equal to 2.

## Description

### TECHNICAL FIELD

This application relates to the field of optical technologies, and in particular, to a detection system, a lidar, and a terminal device.

### BACKGROUND

A lidar (light detection and ranging, LiDAR) system can emit a pulse optical signal and receive a diffuse reflection echo signal of a pulse on a surface of a target object. Energy, a phase, an amplitude, a frequency, flight time, or the like of the diffuse reflection echo signal is detected to obtain distance information of the target object, thereby constructing a three-dimensional structure of the target object.

Lidars can be divided into a mechanical lidar, a semi-solid-state lidar, and an all-solid-state lidar. Mechanical lasers are arranged in a linear shape, and a motor is used to rotate the lasers to scan an entire field of view to obtain a frame of point cloud data. The semi-solid-state lidar includes, for example, a micro-electro-mechanical system (micro-electro-mechanical system, MEMS) lidar. The MEMS lidar uses a technology of the micro-electro-mechanical system to drive a micromirror to rotate, and reflect laser beams to point to different directions, which implements scanning by the lidar. The all-solid-state lidar includes, for example, a planar-array-based lidar that is also referred to as a flash (flash) lidar. The flash lidar has no moving parts, and a plurality of lasers are arranged in a planar array. When the flash lidar runs, the plurality of lasers may simultaneously emit light, and may directly emit a large region of laser light covering a detected region. Then, a high-sensitivity detector array receives a returned echo optical signal to obtain a frame of point cloud data.

Compared with the mechanical lidar and the semi-solid-state lidar, the flash lidar does not depend on a mechanical component, has advantages such as a small size, low costs, high stability, a long service life, and detection efficiency, and is one of main development directions of the lidar in the future. However, a spatial resolution of the flash lidar is positively correlated with a quantity of detectors. To achieve a high spatial resolution, a large quantity of detectors need to be added, which may increase sizes of the detectors and costs of the lidar.

### SUMMARY

This application provides a detection system, a lidar, and a terminal device, to reduce costs of the lidar.

A first aspect provides a detection system. The detection system includes an optical fiber array and a detector array. An optical fiber input end of the optical fiber array includes M×N optical fiber ports, an optical fiber output end of the optical fiber array includes N optical fiber ports, and the detector array includes N detectors, the N optical fiber ports at the optical fiber output end one-to-one correspond to the N detectors, and both M and N are integers greater than or equal to 2. In this way, echo optical signals that are from different locations in an environment and that are received by the M×N optical fiber ports at the optical fiber input end can be output to the N detectors of the detector array through the N optical fiber ports at the optical fiber output end. This can reduce a quantity of detectors, thereby reducing costs of the detection system.

In a possible implementation, the M×N optical fiber ports at the optical fiber input end are configured to receive echo optical signals in a time division manner, and there are N optical fiber ports that are of the M×N optical fiber ports at the optical fiber input end and that are configured to receive the echo optical signals at a first moment. That is, the M×N optical fiber ports at the optical fiber input end receive a total of M×N echo optical signals in batches at M moments. Each optical fiber port correspondingly receives one echo optical signal, and the N optical fiber ports receive optical signals at each moment. In this way, it is ensured that N echo optical signals received by the optical fiber array at each moment can be independently projected to the N detectors in the detector array, which prevents a plurality of echo optical signals from being simultaneously output to the detectors through a same optical fiber port at the optical fiber output end, thereby ensuring detection accuracy.

In a possible implementation, the N detectors in the detector array are configured to receive, at the M moments, a total of M×N echo optical signals emitted by the optical fiber array, and the M×N echo optical signals are respectively received through the M×N optical fiber ports at the optical fiber input end. The M×N echo optical signals are a frame of echo optical signals obtained by scanning an entire to-be-detected region. The N detectors in the detector array receive the frame of echo optical signals for M times. That is, a quantity of detectors in the detector array is reduced, and manufacturing costs of the detection system are reduced. In addition, it can be ensured that a resolution of detection data is not affected.

In a possible implementation, the system further includes a laser array. The system further includes a laser array. The laser array includes M×N lasers, the laser array is configured to emit M×N laser beams in a period, and each of the M×N lasers is configured to emit one laser beam in the period. The laser array in this application is a planar-array-based laser array. Compared with a linear laser array, the planar-array-based laser array can complete scanning of the to-be-detected region without a mechanical motion, and has higher stability. In addition, a scanning frequency of the planar-array-based laser array is not limited to a frequency of the mechanical motion, and therefore the planar-array-based laser array has a higher scanning frequency.

In a possible implementation, the period includes M emission moments, and the laser array is configured to emit N laser beams at each of the emission moments by using N lasers of the M×N lasers. Specifically, the laser array emits the N laser beams at each emission moment by using the N lasers, so that N echo optical signals reflected by the N laser beams on an object are incident to the N optical fiber ports at the optical fiber input end, and are emitted from the N optical fiber ports at the optical fiber output end to the N detectors in the detector array. The laser array emits a total of N×M different laser beams for M times, to complete scanning of the to-be-detected region. In this way, the detector array can complete receiving of echo optical signals corresponding to the entire to-be-detected region for M times, which ensures a resolution of point cloud data when the quantity of detectors is small.

In a possible implementation, an optical fiber corresponding to the optical fiber port at the optical fiber output end is formed through fused biconical taper on optical fibers corresponding to M optical fiber ports at the optical fiber input end. Through fused biconical taper, an aperture of the optical fiber port at the optical fiber output end can be reduced, so that the M two optical fiber ports at the optical fiber input end can be connected to one optical fiber port at the optical fiber output end. Echo optical signals reflected at different locations in a field of view are projected to a same detector by using the optical fiber array. In this way, point cloud data at all locations in the entire field of view can be collected by using a small quantity of detectors.

In a possible implementation, the detection system further includes a receiving optical element, and the receiving optical element is configured to converge the echo optical signals to the optical fiber input end. The receiving optical element is, for example, a lens or a lens group, and can focus the echo optical signals in the environment to the optical fiber input end of the optical fiber array, which improves an optical power and a signal-to-noise ratio of the echo optical signal that can be received by the detector, thereby improving detection precision.

In a possible implementation, the optical fiber input end is located on a focal plane of the receiving optical element. In addition, an area and a size of an optical fiber port array formed by the M×N optical fiber ports at the optical fiber input end coincide with a field of view of the receiving optical element. In this way, the echo optical signals converged by the receiving optical element can be projected to the optical fiber port at the optical fiber input end of the optical fiber array as much as possible, which improves the optical power and the signal-to-noise ratio of the echo optical signals that can be received by the detector, thereby improving the detection precision.

In a possible implementation, an optical fiber corresponding to the optical fiber input end is a single-mode optical fiber, and a numerical aperture of the optical fiber corresponding to the optical fiber input end is D/(2×f). D represents an entrance pupil diameter of the receiving optical element, and f represents a focal length of the receiving optical element. The numerical aperture of the optical fiber at the optical fiber input end is consistent with a numerical aperture of a receiving optical element, so that ideal coupling between the receiving optical element and the optical fiber port at the optical fiber input end is implemented. In this way, the echo optical signal (with a small incident angle) can be accurately projected to a corresponding optical fiber port, and interference caused by crosstalk light (with a large incident angle) incident to the optical fiber port can be avoided, thereby improving the detection precision.

In a possible implementation, an optical fiber corresponding to the optical fiber input end is a multi-mode optical fiber, and a numerical aperture of the optical fiber corresponding to the optical fiber input end is greater than or equal to D/(2×f). D represents an entrance pupil diameter of the receiving optical element, and f represents a focal length of the receiving optical element.

In a possible implementation, an optical fiber corresponding to the optical fiber input end includes a single-mode optical fiber and multi-mode optical fiber, a numerical aperture of the single-mode optical fiber is D/(2×f), and a numerical aperture of the multi-mode optical fiber is greater than or equal to D/(2×f). D represents an entrance pupil diameter of the receiving optical element, and f represents a focal length of the receiving optical element.

In a possible implementation, the optical fiber array is a pitch reducing optical fiber array. An optical fiber pitch in the pitch reducing optical fiber array is small, and optical fibers are compactly arranged, so that a size of the optical fiber array can be reduced.

In a possible implementation, the optical fiber output end is coupled to the detector array through a waveguide, a grating, or a lens. In this way, the echo optical signal output by the optical fiber port at the optical fiber output end can be accurately projected to a corresponding detector.

According to a second aspect, a lidar is provided. The lidar includes the detection system according to the first aspect or any possible implementation of the first aspect.

According to a third aspect, a terminal device is provided. The terminal device includes the lidar according to the second aspect. The terminal device may be a transportation means, an unmanned aerial vehicle, a robot, a mobile phone, a tablet, a computer, an augmented reality device, or the like on which the lidar is mounted.

### BRIEF DESCRIPTION OF DRAWINGS

FIG. 1 is a diagram of a structure of a detection system according to this application;
FIG. 2 is a sectional view of an optical fiber array in FIG. 1 in an A-A direction;
FIG. 3 is a diagram of an application scenario of a detection system according to this application;
FIG. 4 is a diagram of a structure of a lidar according to this application; and
FIG. 5 is a diagram of a structure of a terminal device according to this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

A lidar has characteristics of a high spatial resolution and high detection precision. Accurate three-dimensional modeling and analysis can be performed based on data detected by the lidar, so that an electronic device equipped with the lidar is more intelligent and automated. The lidar is widely used in fields such as military and civil fields like assisted driving, facial recognition, aerial mapping, medical imaging, and the like.

Detection precision of the lidar is proportional to a quantity of lines of the lidar. As more functions of the electronic device depend on high-precision detection data of the lidar, a quantity of lines of laser beams emitted by the lidar also increases. Especially for a flash lidar, to enable laser beams to simultaneously cover an entire to-be-detected region, a quantity of lasers in the flash lidar may reach as high as tens of thousands. These lasers are simultaneously lighted up to emit laser beams covering the entire to-be-detected region, and a receiving side needs to simultaneously receive echo optical signals returned from the entire to-be-detected region. A detector may be considered as a pixel. A resolution of three-dimensional imaging is determined based on a quantity of detectors. To meet a resolution requirement, a detector array including a large quantity of detectors needs to be disposed on the receiving side of the flash lidar. This imposes a high requirement on a manufacturing process of the detector array, and greatly increases costs of the lidar.

To resolve the foregoing problem, this application provides the following embodiments.

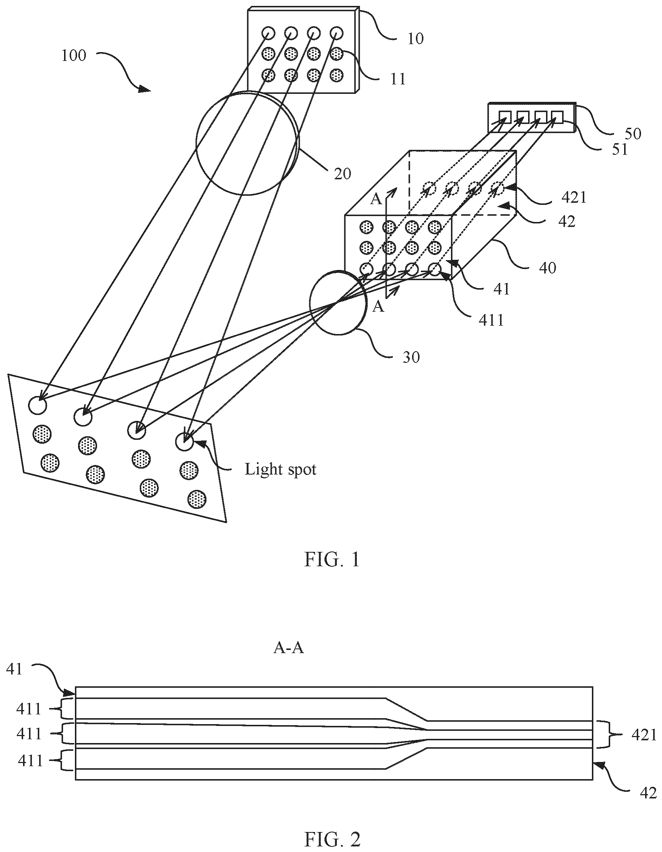

FIG. 1 is a diagram of a structure of a detection system according to this application. The detection system provided in this embodiment may be applied to a plurality of possible scenarios. For example, the detection system may be installed on a vehicle, and is configured to provide environment data for assisted driving, navigation, and the like. Alternatively, the detection system may be installed on an unmanned aerial vehicle as an airborne radar. For another example, the detection system may be installed on an automated guided vehicle (automated guided vehicle, AGV). The AGV is a transport vehicle that is equipped with an automatic navigation apparatus like an electromagnetic or optical navigation apparatus, that can travel along a specified navigation path and that has safety protection and various load transfer functions. For another example, the detection system may also be applied to scenarios such as telemedicine, remote training, multi-player game, and multi-player training.

In this embodiment, the detection system 100 includes a laser array 10, an emitting optical element 20, a receiving optical element 30, an optical fiber array 40, and a detector array 50. One end of the optical fiber array 40 may be coupled to the receiving optical element 30, and the other end may be coupled to the detector array 50. An optical element includes, for example, the emitting optical element 20 and the receiving optical element 30. The laser array 10 is configured to emit laser beams, and the emitting optical element 20 is configured to project the laser beams to an environment. The laser beams form light spots on an object surface, light beams reflected by the light spots are echo optical signals, and the echo optical signals are incident to the receiving optical element 30. The receiving optical element 30 converges the echo optical signals to the optical fiber array 40, the optical fiber array 40 conducts the echo optical signals to the detector array 50, and the detector array 50 converts the echo optical signals into electrical signals. It may be understood that, in FIG. 1, an example in which the laser beam forms the light spot on a same plane is used. In practice, a distance between each light spot and the detection system 100 and a shape of the light spot are subject to an actual shape of a scanned object.

The laser array 10 includes M×N lasers 11 arranged in two dimensions. M may represent a row, and N represents a column. Alternatively, M represents a column, and N represents a row. This is not limited herein. Both M and N are integers greater than or equal to 2. For example, M is 2, 10, 15, 20, 50, 100, 200, or a larger value, and N is 2, 10, 15, 20, 50, 100, 200, or a larger value. Specific values of M and N may be determined based on a size of a covered field of view, light spot density, and the like in an actual application process. This is not limited herein. The laser array 10 is, for example, a planar-array-based laser array 10 (or referred to as a flash laser array), and is an all-solid-state laser array. The laser 11 is, for example, a vertical-cavity surface-emitting laser 11 (vertical-cavity surface-emitting laser, VCSEL), and has advantages of high light beam quality, high precision, miniaturization, low power consumption, high reliability, and the like. The M×N lasers 11 in the laser array 10 in this embodiment may emit large areas of laser beams to the environment in a time division manner, and the laser array 10 or a micro-oscillating mirror does not need to perform a mechanical motion to scan the environment. Therefore, the laser array 10 has higher reliability than a mechanical lidar and a semi-solid-state lidar. In addition, a frequency at which the laser array 10 emits the laser beams is related to a driving pulse frequency, and is not limited by a motion frequency of a mechanical part, and therefore, the laser array 10 has a high scanning frequency.

The emitting optical element 20 is, for example, a lens, a lens group, or a microlens array, and is configured to shape the laser beams emitted by the laser array 10. In a possible implementation, the emitting optical element 20 may be a collimating mirror or an equivalent collimating mirror, and can collimate the laser beams emitted by the laser array 10 and then project the laser beams into an environment. In this way, energy of the laser beams is more concentrated, and energy-concentrated lattice light spots are formed on an object in a to-be-detected region, which can improve an optical power of reflected echo optical signals. In another possible implementation, the emitting optical element 20 is, for example, an optical diffuser, and is configured to evenly project laser beams emitted by the laser array 10 to the to-be-detected region. Certainly, in another implementation, the detection system 100 may not include the emitting optical element 20, that is, the laser beams emitted by the laser array 10 are directly projected to the to-be-detected region without shaping the laser beams. The receiving optical element 30 is, for example, a lens or a lens group, and is specifically, for example, a convex lens or an equivalent convex lens, and is configured to focus and converge echo optical signals reflected by the object, so that the echo optical signals are accurately projected to the optical fiber array 40.

The optical fiber array 40 is, for example, a pitch reducing optical fiber array 40 (pitch reducing optical fiber array, PROFA). In the PROFA, a pitch between fiber cores of optical fibers is small, a plurality of optical fibers are arranged in high density, and have a small size. The detection system may be miniaturized by using the PROFA. The optical fiber array 40 includes an optical fiber input end 41 and an optical fiber output end 42. The optical fiber input end 41 of the optical fiber array 40 is configured to receive an echo optical signal. The echo optical signal is emitted by the optical fiber output end 42 of the optical fiber array 40 after the echo optical signal is transmitted through an optical fiber inside the optical fiber array 40. The optical fiber input end 41 of the optical fiber array 40 is coupled to the receiving optical element 30, and is configured to receive an echo optical signal projected by the receiving optical element 30. The optical fiber output end 42 of the optical fiber array 40 is coupled to the detector array 50. The echo optical signal emitted by the optical fiber output end 42 of the optical fiber array 40 is projected to the detector array 50, and the detector array 50 converts the echo optical signal into an electrical signal. The optical fiber output end 42 of the optical fiber array 40 may be directly coupled to the detector array 50, or may be coupled to the detector array 50 through a waveguide, a grating, a lens, or the like. This is not limited herein.

The optical fiber input end 41 of the optical fiber array 40 is disposed on a focal plane of the receiving optical element 30, so that the echo optical signal projected by the receiving optical element 30 can be accurately projected to the optical fiber input end 41 of the optical fiber array 40, which can reduce a loss of the echo optical signal.

The optical fiber input end 41 of the optical fiber array 40 includes M×N first optical fiber ports 411, and the optical fiber output end 42 of the optical fiber array 40 includes N second optical fiber ports 421. M and N both are integers greater than or equal to 2. The M×N first optical fiber ports 411 at the optical fiber input end 41 are connected to the N second optical fiber ports 421 at the optical fiber output end 42. Specifically, each first optical fiber port 411 at the optical fiber input end 41 is connected to one second optical fiber port 421 at the optical fiber output end 42, and each second optical fiber port 421 at the optical fiber output end 42 is connected to at least two first optical fiber ports 411 at the optical fiber input end 41. In this way, echo optical signals returned at different locations in the environment may be incident to different first optical fiber ports 411, and then may be emitted through a same second optical fiber port 421.

In this embodiment, the M×N first optical fiber ports 411 at the optical fiber input end 41 of the optical fiber array 40 are arranged in a same manner as the laser array 10, and are arranged in a two-dimensional array, to ensure that an emitting field of view of the laser array 10 is consistent with a receiving field of view of the optical fiber array 40. This maximizes the optical power of the echo optical signal and shields crosstalk light outside the field of view, so that a detection result is more accurate. A quantity of first optical fiber ports 411 connected to different second optical fiber ports 421 at the optical fiber output end 42 may be the same. For example, each second optical fiber port 421 is connected to M first optical fiber ports 411. Certainly, the quantity of first optical fiber ports 411 connected to different second optical fiber ports 421 may be different, provided that a plurality of first optical fiber ports 411 can be connected to one second optical fiber port 421. This is not limited herein.

FIG. 2 is a sectional view of the optical fiber array in FIG. 1 in an A-A direction. The second optical fiber port 421 is connected to the M first optical fiber ports 411 through an optical fiber. For example, one end of a plurality of optical fibers may be fused into one optical fiber by using a fused biconical taper (fused biconical taper, FBT) process. Specifically, M optical fibers are placed in a high-temperature environment, the optical fiber is stretched while the optical fibers are gradually melted, and fiber cores of the M optical fibers gradually approach to a specific distance. In this way, an optical fiber whose one end includes M optical fiber ports and the other end includes one optical fiber port may be generated. In this embodiment, optical fiber ports at an end that is of the optical fiber obtained after fused biconical taper and that includes the M optical fibers are the first optical fiber ports 411, and an optical fiber port at an end that is of the optical fiber obtained after fused biconical taper and that includes one optical fiber is the second optical fiber port 421. In this way, the plurality of first optical fiber ports 411 of the optical fiber array 40 are connected to one second optical fiber port 421.

Optical fibers corresponding to the M×N first optical fiber ports 411 may all be single-mode optical fibers, or may all be multi-mode optical fibers, or some may be single-mode optical fibers and some may be multi-mode optical fibers. This is not limited herein. The single-mode optical fiber is an optical fiber that has only one guided mode on a working wavelength. The multi-mode optical fiber is an optical fiber that has a plurality of guided modes on the working wavelength. A main difference between the multi-mode optical fiber and the single-mode optical fiber is that a multi-mode optical fiber has a larger fiber core diameter. When the optical fiber is the single-mode optical fiber, a numerical aperture of the optical fiber is the same as a numerical aperture of the receiving optical element 30, to implement ideal coupling between the receiving optical element 30 and the light. That is, the echo optical signal emitted by the receiving optical element 30 can be projected to the optical fiber to a maximum extent, which reduces a loss in a transmission process of the echo optical signal. A numerical aperture of the single-mode optical fiber is, for example, D/(2×f), where D represents an entrance pupil diameter of the receiving optical element 30, and f represents a focal length of the receiving optical element 30. A numerical aperture of the multi-mode optical fiber is greater than that of a single-mode optical fiber. For example, the numerical aperture of the multi-mode optical fiber is greater than D/(2×f). Meanings of D and f are the same as those described above. There may be crosstalk light in the detection system, and the crosstalk light usually has a large incident angle. However, coupling between the first optical fiber port 411 and the receiving optical element 30 is implemented based on the numerical aperture of the receiving optical element 30, so that an incident angle of light that can be received by the first optical fiber port 411 is usually small, while the incident angle of the crosstalk light is usually large. Therefore, the crosstalk light cannot be incident to the first optical fiber port 411. This can shield the crosstalk light, and prevent the crosstalk light from being incident to the detector array 50, thereby improving measurement precision.

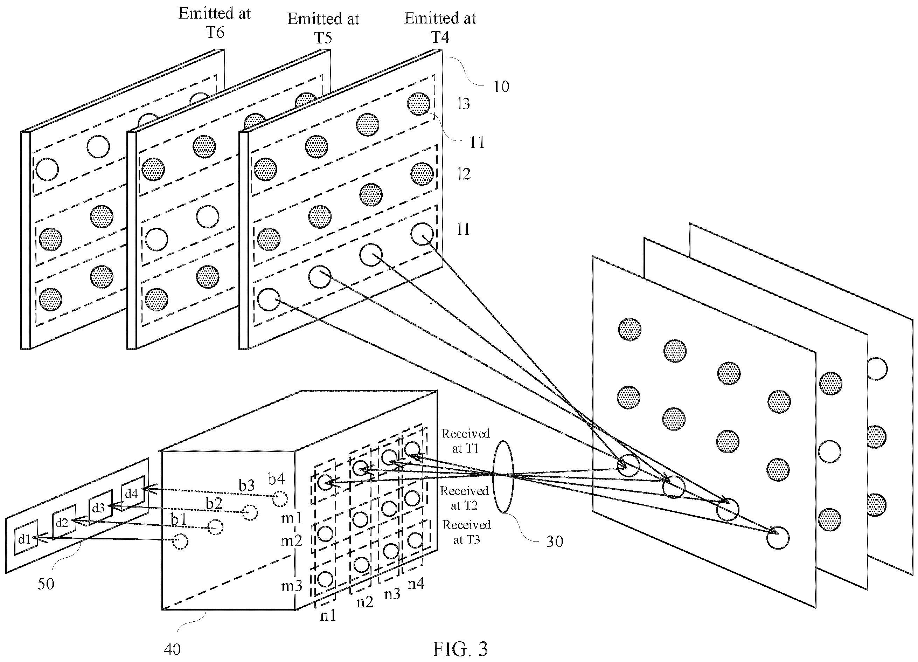

In this embodiment, the M×N first optical fiber ports 411 at the optical fiber input end 41 of the optical fiber array 40 do not simultaneously receive M×N echo optical signals, but receive a total of M×N echo optical signals at M moments. That is, at a first moment, a quantity of first optical fiber ports 411 configured to receive the echo optical signals is N, and the first moment is any one of the M moments. In addition, at the M moments, the first optical fiber ports 411 configured to receive the echo optical signals are different from each other. The M×N first optical fiber ports 411 at the optical fiber input end 41 of the optical fiber array 40 may be divided into M optical fiber port groups, and each optical fiber port group includes N first optical fiber ports 411. In addition, the N first optical fiber ports 411 in each optical fiber port group are connected one by one to the N second optical fiber ports 421, so that each optical fiber port group can receive and transmit the echo optical signals independently and without mutual crosstalk. For example, as shown in FIG. 3, FIG. 3 is a diagram of an application scenario of a detection system according to this application. For example, M is 3 and N is 4. The optical fiber input end 41 includes 3×4 first optical fiber ports. Three first optical fiber ports 411 in a first column n1 are connected to a same second optical fiber port b1, three first optical fiber ports in a second column n2 are connected to a same second optical fiber port b2, a third column n3 is connected to a same second optical fiber port b3, and a fourth column n4 is connected to a same second optical fiber port b4. The second optical fiber ports b1, b2, b3, and b4 are four different second optical fiber ports. The optical fiber input end 41 includes 3×4 first optical fiber ports which may be divided into three optical fiber port groups. Four first optical fiber ports in a first row belong to an optical fiber port group m1, four first optical fiber ports in a second row belong to an optical fiber port group m2, and four first optical fiber ports in a third row belong to an optical fiber port group m3. Herein, only an example in which first optical fiber ports in a same optical fiber port group are from a same row is used. The first optical fiber ports in the same optical fiber port group may also be from different rows. For example, three first optical fiber ports in a same optical fiber port group may be from the first row and the second row, or from the first row and the third row, or from the second row and the third row, or from the first row, the second row, and the third row, and the like. This is not limited herein, provided that the first optical fiber ports in each optical fiber port group are connected to different second optical fiber ports.

The M optical fiber port groups are configured to respectively receive echo optical signals at M different moments, the N first optical fiber ports in one optical fiber port group in the optical fiber array 40 receive the echo optical signals at a same moment. In addition, the optical fiber port groups that receive the echo optical signals at the M different moments are different, and the echo optical signals received at the M different moments are a frame of optical signals obtained by scanning in the to-be-detected region. The echo optical signals received by the N first optical fiber ports 411 in each optical fiber port group are respectively emitted from the N second optical fiber ports 421. Because a quantity of the second optical fiber ports 421 is less than a quantity of the first optical fiber ports 411, the optical fiber array 40 receives the echo optical signals in the time division manner, and may project a total of M×N echo optical signals to the detector array 50 at the M moments through the N second optical fiber ports 421. This can avoid crosstalk caused by simultaneous emission of a plurality of echo optical signals through a same second optical fiber port 421. It may be understood that the foregoing moment may be a timeslot and has a specific time range. This is because distances between a light spot formed by a laser beam in the environment and the laser array 10, and the optical fiber array 40 may be different. Therefore, the N echo optical signals corresponding to N laser beams simultaneously emitted by the laser array 10 may not be incident to the N first optical fiber ports of the optical fiber array strictly at a same time point, and the foregoing same moment may be a same timeslot.

For example, as shown in FIG. 3, an example in which M is 3 and N is 4 is used for description. At a moment T1, the four first optical fiber ports in the optical fiber port group m1 respectively receive the echo optical signals, and the echo optical signals are emitted respectively from the four second optical fiber ports after the echo optical signals are conducted through an optical fiber. At the moment T1, no optical signal enters the optical fiber port group m2 and the optical fiber port group m3. At a moment T2, the four first optical fiber ports in the optical fiber port group m2 respectively receive the echo optical signals, and the echo optical signals are emitted respectively from the four second optical fiber ports after the echo optical signals are conducted through the optical fiber. At the moment T2, no optical signal enters the optical fiber port group m1 and the optical fiber port group m3. At a moment T3, the four first optical fiber ports in the optical fiber port group m3 respectively receive the echo optical signals, and the echo optical signals are emitted respectively from the four second optical fiber ports after the echo optical signals are conducted through the optical fiber. At the moment T3, no optical signal enters the optical fiber port group m1 and the optical fiber port group m2. Therefore, the echo optical signal passing through the second optical fiber port at a moment is only from the echo optical signal received by one first optical fiber port, and a light crosstalk problem does not exist. It may be understood that, in FIG. 3, an example in which the laser beam forms the light spot on a same plane is used. In practice, a distance between each light spot and the detection system 100 and a shape of the light spot are subject to an actual shape of a scanned object.

The detector array 50 includes N detectors 51, and the N detectors 51 one-to-one correspond to the N second optical fiber ports 421 at the optical fiber output end 42 of the optical fiber array 40. That is, one second optical fiber port 421 is coupled to one detector 51, and the echo optical signal emitted by the second optical fiber port 421 is incident to a detector 51 coupled to the second optical fiber port 421. For example, as shown in FIG. 3, the detector array 50 includes detectors d1, d2, d3, and d4. The second optical fiber port b1 is coupled to the detector d1, the second optical fiber port b2 is coupled to the detector d2, the second optical fiber port b3 is coupled to the detector d3, and the second optical fiber port b4 is coupled to the detector d4.

The N detectors 51 may be arranged linearly, or may be arranged in the two-dimensional array. This is not limited herein. The detector array 50 is configured to receive the echo optical signals received by the M optical fiber port groups in the time division manner, that is, the detector array 50 completes receiving and conversion of a frame of M×N echo optical signals in the time division manner. Because the echo optical signals are conducted to the detectors 51 in the detector array 50 by using the optical fiber array 40, a spacing between the detectors 51 in the detector array 50 may be increased, to provide more freedom for selection and layout of the detector array 50. Optionally, structural packaging may be performed on the detectors 51 and the second optical fiber ports 421 of the optical fiber array 40, so that the detectors 51 in the detector array 50 are isolated from each other, and an echo optical signal output by the second optical fiber port 421 is not projected to another detector 51, thereby reducing crosstalk.

A detector 51 may be an optical-to-electrical conversion device, and is configured to convert the echo optical signal into an electrical signal, and a detector 51 corresponds to one pixel. The optical-to-electrical conversion device may be an avalanche photodiode (avalanche photodiode, APD). The optical-to-electrical conversion device may alternatively be a single-photon avalanche diode (single-photon avalanche diode, SPAD). The optical-to-electrical conversion device may be a silicon photomultiplier tube (silicon photomultiplier, Si-PM). The SPAD has characteristics of high sensitivity, a small size, and the like. If the detector 51 is the SPAD, and an aperture of the second optical fiber port 421 is greater than an area of the detector 51, the second optical fiber port 421 may be coupled to the detector 51 through a lens. The lens is configured to re-converge the echo optical signal emitted by the second optical fiber port 421, to ensure that the echo optical signal emitted by the second optical fiber port 421 is incident to the detector 51 as much as possible, and ensure stability of the optical power of the echo optical signal received by the detector 51, thereby ensuring measurement accuracy and precision.

Different from a current planar-array-based lidar that obtains information about the entire to-be-detected region by lighting up all lasers in a laser array at a time, in this application, some lasers 11 in the laser array 10 are lighted up in the time division manner, and the some lasers in the laser array 10 are lighted up for a plurality of times at different moments to obtain a frame of point cloud data.

In this application, a quantity of detectors 51 is N. Therefore, a maximum of N lasers 11 in the laser array 10 may be lighted up each time. Echo optical signals reflected on an object in the to-be-detected region by N laser beams emitted by the N lasers 11 are incident to the receiving optical element 30. The receiving optical element 30 converges the echo optical signals to the N first optical fiber ports 411 at the optical fiber input end 41 of the optical fiber array 40. The echo optical signals are emitted from the N second optical fiber ports 421 through conduction of the optical fiber array 40, and are respectively incident to the N detectors 51 in the detector array 50.

The laser array 10 may be lighted up row by row, or may be lighted up column by column. Certainly, a specified laser 11 in the laser array 10 may be lighted up through addressing, and the N lighted up lasers 11 may be lasers 11 in different rows and/or columns. This is not limited herein. The lighted up N lasers 11 need to satisfy that corresponding echo signals are incident to the N first optical fiber ports 411 that are of the optical fiber array 40 and that are connected to the N second optical fiber ports 421, to avoid a case of mixing light crosstalk.

Specifically, M×N lasers 11 of the laser array 10 and the M×N first optical fiber ports 411 at the optical fiber input end of the optical fiber array 40 have a same quantity and a same arrangement manner. In addition, regions illuminated by laser beams emitted by the M×N lasers 11 are the same as field of views of the M×N first optical fiber ports 411. Therefore, the M×N lasers 11 one-to-one correspond to the M×N first optical fiber ports 411. An echo optical signal corresponding to the laser beam emitted by any laser 11 of the M×N lasers 11 is received by a corresponding first optical fiber port 411 of the M×N first optical fiber ports 411. Therefore, which lasers 11 of the M×N lasers 11 are lighted up determines which first optical fiber ports 411 the echo optical signal enters.

The M×N lasers 11 may be divided into M laser groups, each laser group includes N lasers 11, and the N lasers 11 in the M laser groups do not coincide with each other. The N lasers 11 in a same laser group may be from a same row (row/column), or may be from different rows, to ensure that echo optical signals corresponding to laser beams emitted by the N lasers 11 in the same laser group are respectively output from the N second optical fiber ports 421. This is not limited herein.

In this embodiment, the N lasers 11 in a laser group are each lighted up at M different emission moments in a detection period, and laser groups that are lighted up at the M moments are different from each other. That is, all lasers 11 in the laser array 10 are lighted up for M times in the detection period, N lasers 11 are lighted up each time, and each laser 11 is lighted up once in the detection period, to complete scanning of the to-be-detected region. The M optical fiber port groups that one-to-one correspond to the M laser groups also receive the echo optical signals at the M different moments, and conduct the echo optical signals to the detector array 50. The detector array 50 sequentially receives the echo optical signals and converts the echo optical signals into electrical signals, to obtain corresponding point cloud data. Point cloud data corresponding to a total of M×N echo optical signals received for M times is spliced into one frame of point cloud data of the to-be-detected region.

Optionally, the N lasers 11 in a laser group may be from a same row (row or column). Correspondingly, the N first optical fiber ports 411 in an optical fiber port group are also from a same row. That is, a row of N lasers 11 in the laser group are lighted up at an emission moment. Correspondingly, a row of N first optical fiber ports 411 in the optical fiber port group receive the echo optical signals, and the echo optical signals are emitted from the N second optical fiber ports to the N detectors 51. The lasers 11 in the laser array 10 are lighted up row by row, and emit, at the M emission moments, laser beams required for a frame of scanning. The first optical fiber ports 411 of an optical fiber port array receive the echo optical signals row by row, and receives, at the M moments, echo optical signals of the frame of scanning. Lighting up the lasers 11 in the laser array 10 row by row can simplify control of the laser array 10, and can simplify splicing processing of echo optical signals subsequently received by the detector array for M times.

For example, as shown in FIG. 3, an example in which M is 3 and N is 4 is used for description. At an emission moment T4, four lasers in a laser group 11 are lighted up and emit four laser beams. At the moment T1, the four first optical fiber ports in the optical fiber port group m1 respectively receive echo optical signals reflected on an object by the laser beams emitted at the emission moment T4, and are respectively projected from the four second optical fiber ports to four detectors in the detector array 50 through conduction of the optical fiber. At an emission moment T5, four lasers in a laser group 12 are lighted up and emit four laser beams. At the moment T2, the four first optical fiber ports in the optical fiber port group m2 respectively receive echo optical signals reflected on an object by the laser beams emitted at the emission moment T5, and are respectively emitted and projected from the four second optical fiber ports to the four detectors in the detector array through conduction of the optical fiber. At an emission moment T6, four lasers in a laser group 13 are lighted up and emit four laser beams. At the moment T3, the four first optical fiber ports in the optical fiber port group m3 respectively receive echo optical signals reflected on an object by the laser beams emitted at the emission moment T6, and are respectively projected from the four second optical fiber ports to the four detectors in the detector array through conduction of the optical fiber. In this way, scanning and detection in a detection period are completed. The detector array sequentially receives the electrical signals obtained by using the echo optical signals, and performs processing such as splicing, to obtain three-dimensional point cloud data with a resolution of M×N.

In the optical fiber array 40 in this embodiment, the optical fiber input end 41 includes M×N optical fiber ports, and the optical fiber output end 42 includes N optical fiber ports less than M×N. That is, a plurality of optical fiber ports at the optical fiber input end 41 are connected to one optical fiber port at the optical fiber output end 42. Different optical fiber ports at the optical fiber input end 41 are configured to receive echo optical signals reflected at different positions in the environment, and the echo optical signals reflected at the different positions can be projected to a same detector 51 by using the optical fiber array 40. When a quantity of the detectors 51 is less than a quantity of lasers 11, a small quantity of detectors 51 can collect the echo optical signals of an entire detected region by using the optical fiber array 40. The planar-array-based laser array 10 is used, and the lasers 11 in the laser array 10 are lighted up in the time division manner to complete scanning of the to-be-detected region. Therefore, the scanning can be completed without depending on rotation of a mechanical component, and higher reliability and stability are provided. In addition, because the planar-array-based laser array 10 is not limited by a physical motion of the mechanical component, a scanning frequency of the planar-array-based laser array 10 is positively correlated with a pulse frequency. Even if a frame of scanning is completed in the time division manner in this embodiment, a high pulse frequency may be set, so that the detection system provided in this embodiment can still have a high scanning frequency, thereby ensuring a high frame rate. In addition, only some lasers 11 in the laser array 10 are lighted up each time, and a high current can be provided for the lighted up lasers 11 in a centralized manner, so that the laser beam emitted by the laser 11 has a higher optical power, and a generated echo optical signal also has a higher optical power. This can improve a signal-to-noise ratio of obtained point cloud data and improve measurement precision. Further, the laser array 10 sends laser beams in the time division manner, and accurately projects a plurality of echo optical signals on different paths to one detector 51 through the optical fiber array 40, so that the echo optical signals can be received by a small quantity of detectors 51 without losing a resolution, thereby reducing costs of the detection system.

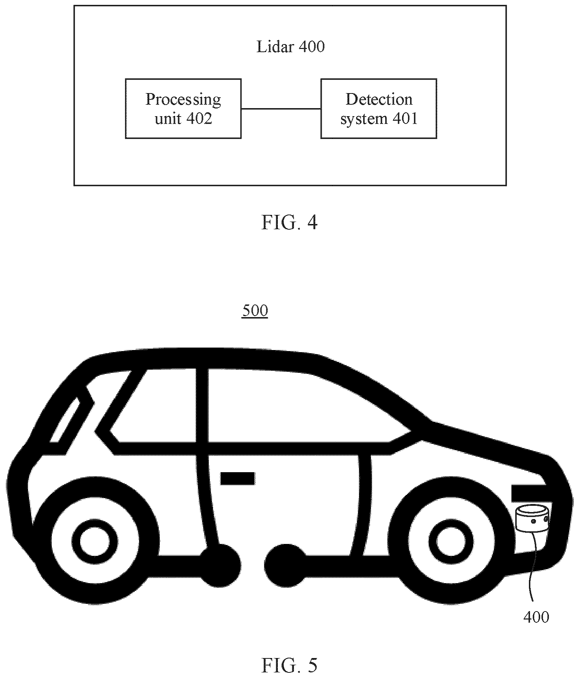

FIG. 4 is a diagram of a structure of a lidar according to this application. In this embodiment, the lidar 400 includes a detection system 401 in the foregoing embodiments and a processing unit 402. The processing unit 402 is configured to send a drive signal to drive a laser array (not shown in the figure) in the detection system 401 to emit laser beams in batches in a detection period. The processing unit 402 is further configured to perform, in a detector array (not shown in the figure), processing such as splicing and distance calculation on electrical signals converted from echo optical signals that are received for a plurality of times in the detection period, to obtain three-dimensional point cloud data of a to-be-detected region.

FIG. 5 is a diagram of a structure of a mobile device according to this application. In this embodiment, the mobile device 500 is a transportation means, an unmanned aerial vehicle, a robot, a mobile phone, a tablet, a computer, an augmented reality device, or the like on which the lidar 400 shown in FIG. 4 is mounted. The transportation means may be a car, a truck, a motorcycle, a bus, a boat, an airplane, a helicopter, a mower, an entertainment vehicle, a playground vehicle, a construction device, a tram, a train, or the like. In FIG. 5, the car is used as an example. The lidar 400 is mounted on the top of the car, or may be mounted at the car head, or may be mounted at a position such as a side of the car, and is configured to detect an environment, to provide environment data required for assisted driving or autonomous driving. There may be one or more lidars 400 mounted in the mobile device 500. This is not limited herein.

Embodiments of this application are described in detail above. The principles and the implementations of this application are described in this specification through specific examples. The description about the embodiments is merely provided to help understand the method and core ideas of this application. In addition, a person of ordinary skill in the art can make modifications in the specific implementations and application scopes based on the ideas of this application. Therefore, the content of this specification shall not be construed as a limitation to this application.

## Claims

1. A detection system, comprising an optical fiber array and a detector array, wherein an optical fiber input end of the optical fiber array comprises M×N optical fiber ports, an optical fiber output end of the optical fiber array comprises N optical fiber ports, the detector array comprises N detectors, the N optical fiber ports at the optical fiber output end one-to-one correspond to the N detectors, and both M and N are integers greater than or equal to 2.

2. The system according to claim 1, wherein the M×N optical fiber ports at the optical fiber input end are configured to receive echo optical signals in a time division manner, and there are N optical fiber ports that are of the M×N optical fiber ports at the optical fiber input end and that are configured to receive the echo optical signals at a first moment.

3. The system according to claim 2, wherein the N detectors in the detector array are configured to receive, at M moments, a total of M×N echo optical signals emitted by the optical fiber array, and the M×N echo optical signals are respectively received through the M×N optical fiber ports at the optical fiber input end.

4. The system according to any one of claims 1 to 3, wherein the system further comprises a laser array, the laser array comprises M×N lasers, the laser array is configured to emit M×N laser beams in a period, and each of the M×N lasers is configured to emit one laser beam in the period.

5. The system according to claim 4, wherein the period comprises M emission moments, and the laser array is configured to emit N laser beams at each of the emission moments by using N lasers of the M×N lasers.

6. The system according to any one of claims 1 to 5, wherein an optical fiber corresponding to the optical fiber port at the optical fiber output end is formed through fused biconical taper on optical fibers corresponding to M optical fiber ports at the optical fiber input end.

7. The detection system according to any one of claims 1 to 6, wherein the detection system further comprises a receiving optical element, and the receiving optical element is configured to converge the echo optical signals to the optical fiber input end.

8. The system according to claim 7, wherein an optical fiber corresponding to the optical fiber input end is a single-mode optical fiber, a numerical aperture of the optical fiber corresponding to the optical fiber input end is D/(2×f), D represents an entrance pupil diameter of the receiving optical element, and f represents a focal length of the receiving optical element.

9. The system according to claim 7, wherein an optical fiber corresponding to the optical fiber input end is a multi-mode optical fiber, a numerical aperture of the optical fiber corresponding to the optical fiber input end is greater than or equal to D/(2×f), D represents an entrance pupil diameter of the receiving optical element, and f represents a focal length of the receiving optical element.

10. The system according to claim 7, wherein an optical fiber corresponding to the optical fiber input end comprises a single-mode optical fiber and multi-mode optical fiber, a numerical aperture of the single-mode optical fiber is D/(2×f), a numerical aperture of the multi-mode optical fiber is greater than or equal to D/(2×f), D represents an entrance pupil diameter of the receiving optical element, and f represents a focal length of the receiving optical element.

11. The system according to any one of claims 7 to 10, wherein the optical fiber input end is located on a focal plane of the receiving optical element.

12. The system according to any one of claims 1 to 11, wherein the optical fiber array is a pitch reducing optical fiber array.

13. The system according to any one of claims 1 to 12, wherein the optical fiber output end is coupled to the detector array through a waveguide, a grating, or a lens.

14. A lidar, wherein the lidar comprises the detection system according to any one of claims 1 to 13.

15. A terminal device, wherein the terminal device comprises the lidar according to claim 14.
